# EUROPÄISCHE PATENTSCHRIFT

(11) **EP 0 352 461 B1**
(45) Veröffentlichungstag und Bekanntmachung des Hinweises auf die Patenterteilung: **03.11.1993**
(21) Anmeldenummer: 89110844.1
(22) Anmeldetag: 15.06.1989
(51) Int. Cl.: B60J 7/05

(54) **Schiebehebedach für Fahrzeuge**
Sliding roof for vehicles
Toit ouvrant pour véhicules automobiles

(30) Priorität: 25.07.1988 DE 3825193
(43) Veröffentlichungstag der Anmeldung: 31.01.1990
(73) Patentinhaber: Bayerische Motoren Werke Aktiengesellschaft, 80788 München (DE)
(72) Erfinder: Clausen-Schaumann, Andreas, D-8139 Bernried (DE)

(56) Entgegenhaltungen:
- DE-A- 2 523 330
- DE-A- 3 603 314
- DE-U- 8 811 531
- GB-A- 2 167 356

## Beschreibung

Die Erfindung betrifft ein Schiebehebedach für Fahrzeuge, mit den im Oberbegriff des Patentanspruches 1 angegebenen Merkmalen.

Ein derartiges Schiebehebedach ist in der DE-A-36 03 314 an einem Kraftfahrzeug vorgesehen und weist zwei seitlich gegenüberliegende Ausstellhebel auf, die jeweils um eine Querachse schwenkbar an einem Hebelende an einem dachseitig längsverstellbaren Gleitstein und am anderen Hebelende an einem hinteren Seitenbereich eines Deckels angelenkt sind, der in Schließstellung eine Dachöffnung verschließt. Die Ausstellhebel befinden sich bei geschlossenem Deckel in einer nach vorne oben gerichteten Lage. Ein von einem Ausstellhebel seitlich abstehender Zapfen, der in eine Nutausnehmung einer motorisch längsverstellbaren Steuerkulisse eingreift, soll den Deckel in Schließstellung und beim Ausstellen seiner Hinterkante festhalten. Die in Schließstellung geneigten Ausstellhebel dürften nur geringe, am Deckel wirkende Vertikalkräfte aufnehmen können, da die mit Hebelwirkung abgestützten Ausstellhebel hohe Abstützmomente verursachen, die von beiden Ausstellhebeln zusätzlich zur Vertikallast aufzunehmen sind. Der Deckel ist in seiner Schließstellung auch bei funktionsfähigen Teilen nicht ausreichend festgehalten, da der Gleitstein in einer Längsausnehmung der Steuerkulisse frei verstellbar angeordnet ist und in Schließstellung des Deckels der Zapfen in einen horizontalen Abschnitt der Nutausnehmung eingreift, so daß beispielsweise bei Fahrzeugbeschleunigungen oder -verzögerungen die mit einer Rolle in eine Nutausnehmung am Deckel eingreifenden Ausstellhebel Längsbewegungen ausführen können, die ungewollte Höhenbewegungen der Hinterkante des Deckels bewirken. Ein weiterer wesentlicher Nachteil ist darin zu sehen, daß bei einer Anfangsbewegung beim Ausstellen des Deckels der Zapfen aus der Nutausnehmung austritt, wodurch der noch nicht vertikal gestellte Ausstellhebel nicht ausreichend festgehalten ist, wenn an diesem Vertikalkräfte wirken.

Der Erfindung liegt die Aufgabe zugrunde, ein Schiebehebedach nach dem Oberbegriff des Patentanspruches 1 anzugeben, das in Schließstellung und in jeder Lage des nach oben ausgestellten Deckels größere am Deckel wirkende Vertikalkräfte aufnehmen kann. Darüber hinaus soll das Schiebehebedach eine geringe Bauhöhe aufweisen.

Diese Aufgabe ist durch die im Kennzeichen des Patentanspruches 1 angegebenen Merkmale gelöst. Besonders vorteilhaft ist, daß die in Schließstellung und in jeder Lage bei ausgestelltem Deckel vertikalen Schwenkhebel hohe Vertikalkräfte aufnehmen und in die Karosserie des Fahrzeugs einleiten können, die auf den Deckel beispielsweise unfallbedingt einwirken. Bei aus der Schließstellung abgesenktem Deckel können die Schwenkhebel eine platzsparende, etwa horizontale Lage einnehmen. Der in eine Steuerbahn am Fahrzeugdach eingreifende Steuerbolzen bewirkt bei einer Verlagerung des Deckels in die Schließstellung selbst dann ein selbsttätiges Anheben der Schwenkhebel in die etwa vertikale Lage, wenn sich die Schwenkhebel bei aus der Schließstellung abgesenktem und ggf. zurückverlagertem Deckel in einer exakt horizontalen Lage befinden. Der Abstand der zur Abstützung des vorderen Deckelbereiches vorgesehenen Querachse und den im hinteren Bereich des Deckels angeordneten Schwenkhebeln entspricht etwa der Länge des Deckels, so daß dieser auch große Momentenbelastungen aufnehmen kann. Die Schwenkhebel erfordern auch nur eine geringe, zum Absenken des Deckels aus der Schließposition ausreichende Länge, so daß die Bauhöhe des Schiebehebedaches klein gehalten werden kann. Zum Ausstellen des Deckels aus der Schließposition sind die seitlich gegenüberliegend angeordneten Schwenkhebel nach vorne zu verlagern, wodurch sich der Basisabstand zwischen der vorderen Querachse des Deckels und den Schwenkhebeln verringert. Durch die vertikale Anordnung der Schwenkhebel können diese jedoch auch in einer bei ausgestelltem Deckel vorderen Lage die auf den Deckel einwirkenden Kräfte und Momente ohne Beschädigung von Bauteilen aufnehmen und in die Karosserie einleiten.

Einer besonders vorteilhaften Ausgestaltung der Erfindung liegt die Aufgabe zugrunde, den Deckel beim Ausstellen ein wenig zurückzuverlagern, damit die zwischen dem Deckel und dem vorderen Rand der Dachöffnung angeordneten Bauteile beim Ausstellen des Deckels nicht eingeklemmt werden.

Hierzu ist in den Unteransprüchen eine Rückstelleinrichtung vorgesehen, bei der die vorderen, die Querachse bildenden Gleitsteine in Längsrichtung frei verschiebbar sind und jede Führungsschiene an ihrem hinteren Bereich um eine Querachse schwenkbar mit dem Deckel verbunden ist. In einem Unteranspruch weist die Führungsschiene an ihrem nach vorne unten gerichteten Ende ein kreisringabschnittförmiges Bogenelement auf, das in einer entsprechenden Führung in einem zwischen dem betreffenden Gleitstein und dem Schlitten längsverschiebbar angeordneten Führungselement um eine scheinbare, über dem Führungselement liegende Querachse schwenkbar ist. Auf diese vorteilhafte Weise wird beim Ausstellen des Deckels mit arretiertem Führungselement die Führungsschiene und damit der Deckel ein wenig zurückverlagert, so daß ein beispielsweise zwischen dem vorderen Deckelrand und dem vorderen Rand der Dachöffnung angeordneter Windabweiser nicht eingeklemmt oder beschädigt wird. Die Führung ist so ausgebildet, daß das Bogenelement beim Ausstellen des Deckels eine kreisförmige Bewegung um eine scheinbare Querachse ausführt, die über dem Führungselement liegt. Auf diese vorteilhafte Weise kann das Führungselement und damit das Schiebehebedach eine geringe Bauhöhe aufweisen.

Bei einer weiteren, eine andere Rückstelleinrichtung betreffenden Ausgestaltung der Erfindung ist die Führungsschiene ebenfalls an ihrem hinteren Bereich mit dem Deckel um eine Querachse schwenkbar verbunden. Die Führungsschiene ist jedoch bei dieser Ausführung an ihrem nach vorne unten gerichteten Ende um eine Querachse schwenkbar an einem Gleitelement befestigt, das in Dachführungsschienen längsverlagerbar ist. Außerdem steht von der Führungsschiene seitlich ein Bolzen ab, der in eine seitliche Steuerausnehmung eines hinter dem Gleitelement längsverschiebbaren Steuerschlittens eingreift. Ist der Steuerschlitten in Schließstellung des Deckels von einer Arretierungseinrichtung festgehalten und sind die vorderen Gleitsteine sowie das Gleitelement in Längsrichtung frei verschiebbar, so führt die Führungsschiene und damit der Deckel beim Ausstellen einerseits eine Schwenkbewegung und andererseits aufgrund der Verlagerung des Bolzens in der Steuerausnehmung eine kleine Bewegung nach rückwärts aus. Deshalb können die zwischen dem vorderen Rand des Deckels und dem vorderen Rand der Dachöffnung angeordneten Bauteile, beispielsweise ein aus- und einfahrbarer Windabweiser, nicht eingeklemmt werden.

Bei einer derartigen Rückstelleinrichtung ist die Führungsschiene gegenüber dem Deckel und mit dem Ausstellen des Deckels zunehmend schräg gestellt. Auf diese besonders vorteilhafte Weise ist ein geringer Verstellweg des Schlittens und damit des Schwenkhebels in Längsrichtung ausreichend, um den Deckel vollständig nach oben auszustellen. Darüber hinaus wird beim Ausstellen des Deckels der Abstand der Schwenkhebel von der vorderen Querachse nur gering vermindert, so daß die Belastbarkeit des ausgestellten Deckels kaum geringer als die Belastbarkeit des geschlossenen Deckels ist.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen
- Figur 1: einen Längsschnitt durch den nach oben ausgestellten Deckel des Schiebehebedaches,
- Figur 2: eine Figur 1 entsprechende Ansicht mit geschlossenem Deckel,
- Figur 3: eine perspektivische Ansicht auf die im linken Seitenbereich der Dachöffnung in Führungen verschiebbaren Teile des Schiebehebedaches,
- Figur 4: den in Schließstellung vertikalen Schwenkhebel gemäß Figur 3 in Einzeldarstellung,
- Figur 5: ein zweites Ausführungbeispiel in einer Figur 1 entsprechenden Ansicht, mit anderer Rückstelleinrichtung und
- Figur 6: eine Figur 2 entsprechende Ansicht von der Ausführung gemäß Figur 5.

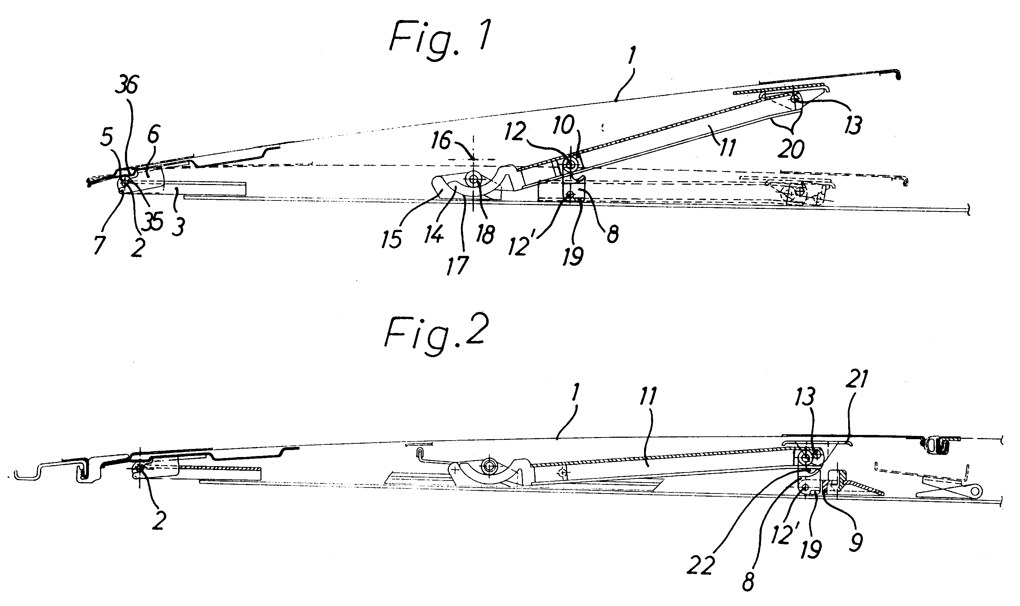

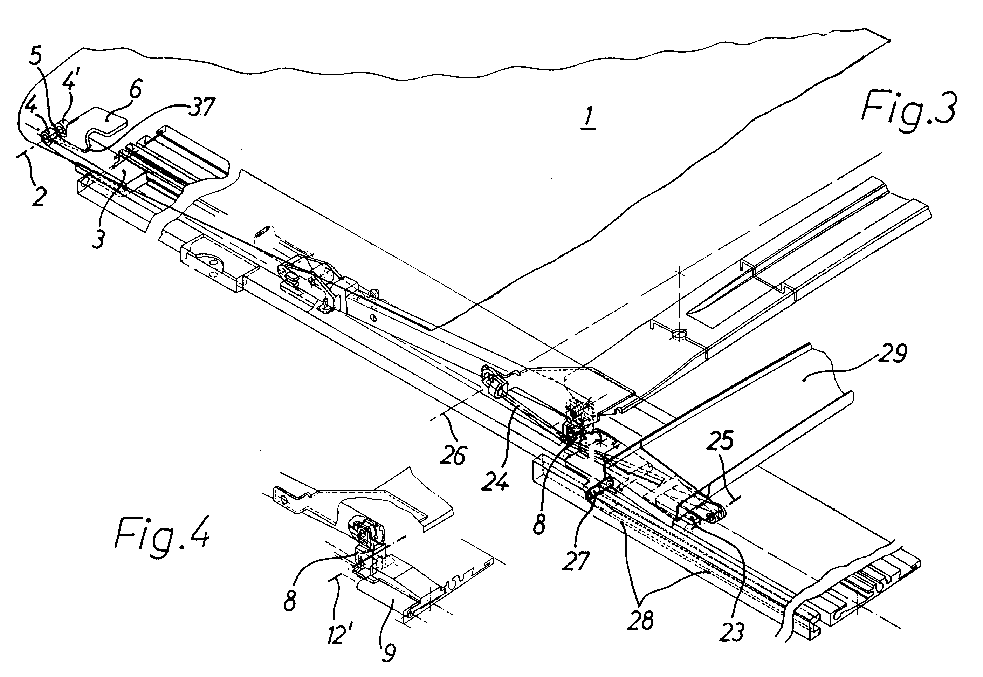

Das in Figur 1 in einem ersten Ausführungsbeispiel dargestellte Schiebehebedach eines Kraftfahrzeugs weist einen Deckel 1 auf, der um eine vordere Querachse 2 schwenkbar ist. Der Deckel 1 kann mit seiner Hinterkante abgesenkt und in ein hinteres Aufnahmefach eingebracht werden. Ebenso kann der Deckel 1 aus seiner die Dachöffnung verschließenden Schließstellung mit seiner Hinterkante über die Dachkontur hinaus nach oben ausgestellt werden, um eine Be- oder Entlüftung des Fahrzeuginnenraumes zu erreichen. Die Querachse 2 ist an zwei seitlich gegenüberliegenden Gleitsteinen 3 gebildet, die in Dachführungen in Längsrichtung frei verschiebbar sind. Jeder Gleitstein 3 weist gemäß Figur 3 zwei mit seitlichem Abstand nach vorne gerichtete Schenkel 4, 4′ auf. Diese nehmen einen zwischen den Schenkeln 4, 4′ quer verlaufenden Bolzen 5 auf, der die Querachse 2 bildet. Gemäß Figur 1 sind an der vorderen Unterseite des Deckels 1 an beiden Seitenbereichen nach vorne gerichtete Stützarme 6 ausgebildet, die jeweils am vorderen Ende eine Nase 7 aufweisen. Die Nase 7 untergreift den Bolzen 5 nach der Montage des Deckels 1, der im Ausführungsbeispiel mit einer Stützschulter 35 an seinem Stützarm 6 von hinten an dem Bolzen 5 anliegt. Jeweils ein an den vorderen Seitenbereichen an der Deckelunterseite angeordnetes Stützelement 36 liegt mit seiner Unterseite an dem vorderen oberen Rand des Gleitsteines 3 an, der in Querrichtung zylindrisch ausgebildet ist. Wie aus der Figur 3 ersichtlich ist, liegt der vom vorderen unteren Bereich des Deckels 1 nach vorne unten abstehende Stützarm 6 an dem die Schenkel 4, 4′ verbindenden Steg 37 des Gleitsteines 3 von vorne an. Auf diese Weise ist der Stützarm 6 nach der Montage des Deckels 1 zwischen den Schenkeln 4, 4′, dem Steg 37 und dem Bolzen 5 gefangen, ohne eine Schwenkbewegung des Stützarmes 6 und damit des Deckels 1 um die durch den Bolzen 5 gebildete Querachse 2 zu behindern. In seinem hinteren Bereich ist der Deckel 1 gemäß Figur 1 über zwei seitlich gegenüberliegende Schwenkhebel 8 hö henverstellbar. Jeder Schwenkhebel 8 ist an einem Ende mit einem am Fahrzeugdach längsverschiebbaren, in Figur 2 dargestellten Schlitten 9 und am anderen Ende gemäß Figur 1 mit einem Gleitkörper 10 um Querachsen 12, 12′ schwenkbar verbunden. Der Gleitkörper 10 ist in einer Führungsschiene 11 längsverschiebbar, die im Ausführungsbeispiel an ihrem hinteren Bereich um eine Querachse 13 schwenkbar mit dem Deckel 1 verbunden ist. Zwischen dem vorderen Rand des Deckels 1 und dem vorderen Rand der Dachöffnung ist ein nicht dargestellter Windabweiser angeordnet, der in Schließstellung des Deckels 1 eingefahren ist. Um ein Einklemmen und dadurch eine Beschädigung des Windabweisers beim Ausstellen des Deckels 1 zu vermeiden, weist das Schiebehebedach eine Rückstelleinrichung auf, die den Deckel 1 beim Ausstellen entsprechend zurückverlagert. Bei dem ersten Ausführungsbeispiel ist die Rückstelleinrichtung durch die Führungsschiene 11 gebildet, die an ihrem nach vorne unten gerichteten Ende ein kreisringabschnittförmiges, nach unten konvex gekrümmtes Bogenelement 14 aufweist. Dieses ist in einer an das Bogenelement 14 angepaßten Führung in einem zwischen dem Gleitstein 3 und dem Schlitten 9 längsverschiebbar angeordneten Führungselement 15 um eine scheinbare, über dem Führungselement 15 liegende Querachse 16 schwenkbar. Bei dem Ausführungsbeispiel ist die Führung durch einen zylinderabschnittförmigen Wandabschnitt 17 des Führungselements 15 und eine darüber zwischen Seitenwänden des Führungselements 15 drehbar angeordnete Rolle 18 gebildet, die mit dem Wandabschnitt 17 und den Seitenwänden eine an den Querschnitt des Bogenelements angepaßte Durchtrittsöffnung bildet. Zum Ausstellen des Deckels 1 wird der in Schließstellung vertikale Schwenkhebel 8 über den angetriebenen Schlitten 9 nach vorne verlagert. Die vertikale Stellung des Schwenkhebels 8 ist durch einen nicht dargestellten Anschlag an dem Schlitten 9 festgelegt, der eine Schwenkbewegung des vertikalen Schwenkhebels 8 im Uhrzeigersinn um die Querachse 12′ verhindert. Durch das in einer Führung geführte Bogenelement 14 wird die Führungsschiene 11 beim Ausstellen des Deckels 1 um die gedachte Querachse 16 geschwenkt und gleichzeitig etwas zurückverlagert. Der im hinteren Bereich mit der Führungsschiene 11 verbundene Deckel 1 wird deshalb beim Ausstellen ebenfalls verschwenkt und soweit zurückverlagert, daß der zwischen dem Deckel 1 und dem vorderen Rand der Dachöffnung angeordnete Windabweiser nicht eingeklemmt wird. Damit der Schwenkhebel 8 beim Einschwenken des Deckels 1 durch Verlagerung des Schlittens 9 nicht im Gegenuhrzeigersinn verschwenkt wird, ist eine Schwenksicherung vorgesehen, die den Schwenkhebel 8 beim Einschwenken des ausgestellten Deckels 1 in die Schließstellung festhält. Bei dem Ausführungsbeispiel ist die Schwenksicherung durch ein im unteren Bereich des vertikalen Schwenkhebels 8 seitlich abstehendes Stützelement 19 gebildet, das in einem dem Ausstellen des Deckels 1 entsprechenden Verschiebebereich des Schlittens 9 in einer Längsführung am Fahrzeugdach verschiebbar ist. Die Führungsschiene 11 weist in ihrem hinteren Bereich einen in Schließstellung des Deckels 1 waagrechten Führungsabschnitt 20 auf, der einen Toleranzausgleich ermöglicht, da in diesem Bereich eine Längsverlagerung des Gleitkörpers 10 keine Höhenverstellung des Deckels 1 bewirkt.

Wird der Deckel 1 des Schiebehebedaches in die Schließstellung abgesenkt, so gelangt dieser in die in Figur 2 dargestellte Lage. Eine nicht dargestellte Arretierungseinrichtung verhindert eine Verlagerung des verschiebbaren Führungselements 15 beim Ausstellen und in Schließstellung des Deckels 1. Die Arretierungseinrichtung ist durch einen nicht dargestellten, am Führungselement 15 schwenkbaren Sperrhebel gebildet, der eine Sperrnase aufweist, die bei ausgestelltem und in Schließstellung befindlichen Deckel 1 federbelastet in eine Vertiefung am Fahrzeugdach eingreift. Wird der Deckel 1 aus seiner Schließstellung abgesenkt, so verlagert sich die mit dem Deckel 1 zusammenwirkende Sperrnase aus der Vertiefung heraus in eine Entriegelungsstellung, so daß das Führungselement 15 und damit der abgesenkte Deckel 1 zurückgeschoben werden kann. Beim Absenken des Deckels 1 aus der Schließstellung wird der Schwenkhebel 8 im Gegenuhrzeigersinn in eine etwa horizontale Lage geschwenkt. Bei dem Ausführungsbeispiel verläuft die nicht dargestellte Längsführung, in der das Stützelement 19 verschiebbar geführt ist, über den gesamten Verstellbereich des Schlittens 9. Damit der Schwenkhebel 8 in Gegenuhrzeigersinn um die Querachse 12′ am Schlitten 9 geschwenkt und damit die Hinterkante des Deckels 1 durch eine Schwenkbewegung um die Querachse 2 abgesenkt werden kann, ist in nicht dargestellter Weise in dem oberen waagrechten Schenkel der aus einer U-förmigen Schiene gebildeten Längsführung eine Ausnehmung, durch die das hinter und unter der Querachse 12′ ausgebildete Stützelement 19 beim Schwenken des Schwenkhebels 8 hindurchtreten kann. Ist die Hinterkante des Deckels 1 abgesenkt und damit der Schwenkhebel 8 etwa in eine horizontale Lage verlagert, so befindet sich das Stützelement 19 über dem oberen Schenkel der Längsführung. Der obere Schenkel der Längsführung und das Stützelement 19 wirken bei zurückgeschobenem Deckel 1 so zusammen, daß eine Schwenkbewegung des Schwenkhebels 8 bei einer Verlagerung des Deckels 1 aus seiner zurückgeschobenen Stellung nach vorne in die Schließstellung verhindert wird. Ist der abgesenkte Deckel 1 in seine vorderste, beispielsweise von einem Anschlag begrenzte Stellung verlagert, so wird durch eine weitere Bewegung des angetriebenen Schlittens 9 nach vorne der von dem Schlitten 9 etwa horizontal nach vorne gerichtete Schwenkhebel 8 in seine von einem Anschlag begrenzte vertikale Lage geschwenkt, wodurch der abgesenkte Deckel 1 mit seiner Hinterkante in die dargestellte Schließstellung angehoben wird. Bei dem Ausführungsbeispiel ist der Deckel 1 an seinem hinteren unteren Bereich mit einer Querstrebe 21 verbunden, die in ihren Seitenbereichen jeweils in einem Schwenkwinkelbereich um die Querachse 13 schwenkbar mit einer Führungsschiene 11 verbunden ist. Damit der Schwenkhebel 8 bei einer Schwenkbewegung im Gegenuhrzeigersinn beim Absenken des Deckels 1 nicht an der im Ausführungsbeispiel durch einen Bolzen gebildeten Querachse 13 anliegt und dadurch an einem weiteren Verschwenken gehindert wird, weist der Schwenkhebel 8 eine entsprechende Ausnehmung 22 auf. Die Querachse 13 könnte aber auch so ausgebildet werden, daß die Ausnehmung 22 nicht erforderlich ist.

Wie in Figur 3 dargestellt weist das Schiebehebedach in beiden Seitenbereichen jeweils hinter dem Schlitten ein in einer Dachlängsführung verschiebbares Gleitelement 23 auf, an dem ein Ende eines Hebels 24 um eine Querachse 25 schwenkbar aufgenommen ist. Der Hebel 24 ist mit seinem anderen Ende im hinteren Seitenbereich an dem Deckel 1 um eine Querachse 26 schwenkbar befestigt. Bei dem Ausführungsbeispiel sind die beiden seitlich gegenüberliegenen Hebel 24 über eine zwischen den Hebeln 24 querverlaufende Wasserrinne 29 verbunden, die beim Ausstellen des Deckels 1 um die Querachse 25 nach oben geschwenkt wird und im hinteren Bereich der Dachöffnung eindringendes Wasser sammelt und ableitet. Von einem seitlichen Wandelement der Wasserrinne 29 steht seitlich ein Steuerbolzen 27 ab, der in eine seitliche Steuerbahn 28 am Fahrzeugdach eingreift. Über den in die Steuerbahn 28 eingreifenden Steuerbolzen 27 oder dergleichen wird das Hochschwenken des Schwenkhebels 8 beim Anheben des

Der in Schließstellung und bei ausgestelltem Deckel vertikale Schwenkhebel 8 ist in Figur 4 in seiner Lage bei geschlossenem Deckel dargestellt. Der im Ausführungsbeispiel angetriebene Schlitten 9, der an seinem vorderen Bereich den Schwenkhebel 8 um die Querachse 12′ schwenkbar aufnimmt, ist mit einem nicht dargestellten Antriebskabel verbunden.

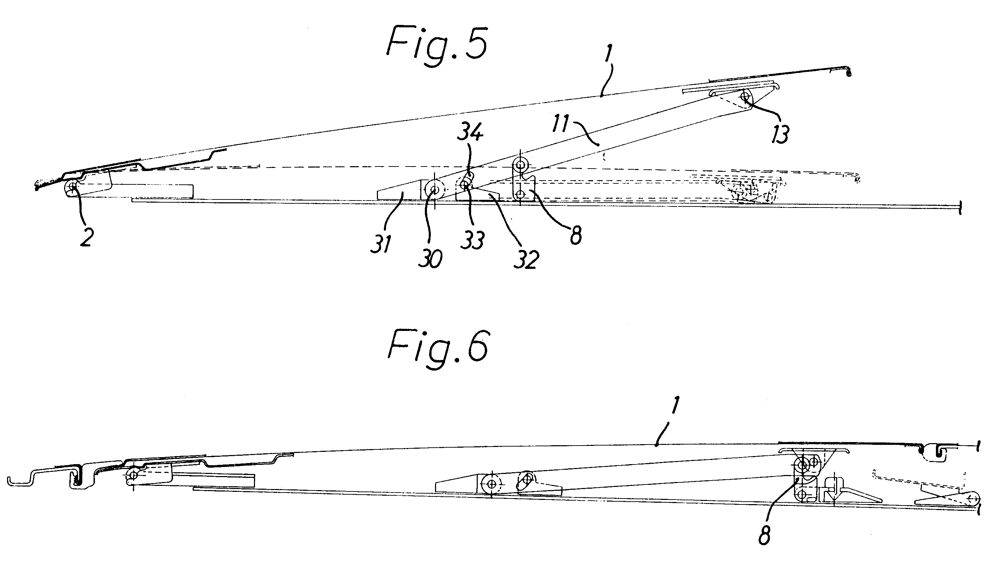

Ein zweites Ausführungsbeispiel des Schiebehebedaches ist in Figur 5 bei ausgestelltem Deckel 1 dargestellt. Dieses Schiebehebedach ist mit Ausnahme der nachfolgend angegebenen Unterschiede wie das im ersten Ausführungsbeispiel angegebene Schiebehebedach gebildet. Das zweite Ausführungsbeispiel weist im wesentlichen eine andere Rückstelleinrichtung des Deckels 1 auf, die ebenfalls durch die im hinteren Bereich mit dem Deckel 1 um eine Querachse 13 schwenkbar verbundene Führungsschiene 11 gebildet ist. Die Führungsschiene 11 ist bei diesem zweiten Ausführungsbeispiel an ihrem nach vorne unten gerichteten Ende um eine Querachse 30 schwenkbar an einem in Dachführungsschienen längsverstellbaren Gleitelement 31 befestigt. Von einem hinter den Gleitelement 31 längsverschiebbaren Steuerschlitten 32 steht seitlich ein Bolzen 33 ab, der eine durch einen Schlitz gebildete Steuerausnehmung 34 in der Führungsschiene 11 durchsetzt. Ebenso könnte aber auch der Bolzen von der Führungsschiene seitlich abstehen um die Steuerausnehmung an dem Steuerschlitten ausgebildet sein. Bei dem Ausführungsbeispiel ist die Steuerausnehmung 34 nach unten konvex gekrümmt schräg nach hinten oben verlaufend ausgebildet. Die Steuerausnehmung 34 könnte aber auch anders verlaufen. Ähnlich wie bei dem ersten Ausführungsbeispiel ist eine nicht dargestellte Arretierungseinrichtung vorgesehen, die bei dem zweiten Ausführungsbeispiel den in Figur 5 dargestellten Steuerschlitten 32 bei ausgestelltem und bei in Schließstellung befindlichem Deckel 1 festhält. Wird der Schwenkhebel 8 beim Ausstellen des Deckels 1 nach vorne verlagert, so wird die Steuerschiene 11 bei festgehaltenem Steuerschlitten 32 einerseits um die Querachse 30 geschwenkt und andererseits über den in die Steuerausnehmung 34 eingreifenden Bolzen 33 etwas zurückverlagert. Der mit der Steuerschiene 11 verbundene Deckel 1 wird dadurch um die Querachse 2 geschwenkt und soweit zurückverlagert, daß der zwischen dem Deckel 1 und dem vorderen Rand der Dachöffnung angeordnete Windabweiser beim Ausstellen des Deckels 1 nicht eingeklemmt oder beschädigt wird.

In Figur 6 ist das Schiebehebedach gemäß Figur 5 mit in Schließstellung befindlichem Deckel 1 dargestellt. Wie man erkennt, weist das Schiebehebedach wie beim ersten Ausführungsbeispiel eine geringe Bauhöhe und durch den vertikal stehenden Schwenkhebel 8 eine große Belastbarkeit auf.

## Patentansprüche

1. Schiebehebedach für Fahrzeuge, mit einem in Schließstellung eine Dachöffnung verschließenden Deckel (1), der aus der Schließstellung entweder abgesenkt zurückverlagerbar oder mit seiner Hinterkante ausstellbar ist, wobei der Deckel (1) vorne um eine Querachse (2) an zwei seitlichen, in Dachführungen längsverschiebbaren Gleitsteinen (3) schwenkbar und hinten über zwei seitliche Schwenkhebel (8) hohenverstellbar ist, die jeweils an ihren Enden um eine Querachse schwenkbar einerseits mit einem am Fahrzeugdach längsverschiebbaren Schlitten (9) und andererseits mit einem Gleitkörper (10) verbunden sind, der in einer den < Deckel (1) hinten stützenden Führungsschiene (11) verschiebbar ist, wobei ferner die Schwenkhebel bei aus der Schließstellung abgesenktem und zurückverlagertem Deckel von dem mit einem Antriebskabel verbundenen Schlitten (9) etwa nach vorne abstehen und bei ausgestelltem Deckel in eine von einem Anschlag begrenzte etwa vertikale Stellung geschwenkt sind, in der sie beim weiteren Ausstellen des Deckels verbleiben, und im hinteren Bereich der Dachöffnung eine Wasserrinne (29) angeordnet ist, dadurch gekennzeichnet, daß hinter dem Schlitten (9) ein Gleitelement (23) in Dachlängsführungen verschiebbar ist, an dem ein Ende eines Hebels (24) um eine Querachse (25) schwenkbar aufgenommen ist, der mit seinem anderen, nach vorne oben gerichteten Ende um eine im hinteren Seitenbereich an dem Deckel (1) ausgebildete Querachse (26) schwenkbar befestigt ist und von dem letztgenannten Hebel (24) oder der als mit dem letztgenannten Hebel (24) verbundenes Bauteil ausgebildeten Wasserrinne (29) seitlich ein Steuerbolzen (27) oder dergleichen absteht, der in eine seitliche Steuerbahn (28) am Fahrzeugdach derart eingreift, daß die Schwenkhebel (8) beim Anheben des abgesenkten Deckels (1) in die Schließstellung in die von dem Anschlag begrenzte etwa vertikale Stellung schwenken, wobei die Schwenkhebel (8) in Schließstellung und in jeder Lage beim Ausstellen des Deckels (1) von dem in die Steuerbahn (28) eingreifenden Steuerbolzen (27) oder dergleichen unterstützt in dieser etwa vertikalen Stellung an dem Anschlag anliegen.

2. Schiebehebedach nach Anspruch 1, dadurch gekennzeichnet, daß der Gleitstein (3) in der Dachführung frei verschiebbar ist und zwei mit seitlichem Abstand nach vorne gerichtete Schenkel (4, 4') aufweist, die einen zwischen den Schenkeln (4,4') quer verlaufenden Bolzen (5) aufnehmen, der die Querachse (2) bildet.

3. Schiebehebedach nach Anspruch 2, dadurch gekennzeichnet, daß der Bolzen (5) nach der Montage des Deckels (1) von einer Nase (7) hintergriffen ist, die an einem von dem Deckel (1) etwa nach vorne abstehenden Stützarm (6) ausgebildet ist.

4. Schiebehebedach nach einem der Ansprüche 1 bis 3, dadurch gekennzeichnet, daß der Schwenkhebel (8) eine Schwenksicherung aufweist, die beim Einschwenken des ausgestellten Deckels (1) und Rückverlagerung des Schlittens (9) den Schwenkhebel (8) in seiner vertikalen Stellung festhält.

5. Schiebehebedach nach Anspruch 4, dadurch gekennzeichnet, daß die Schwenksicherung durch ein vom Schwenkhebel (8) seitlich abstehendes Stützelement (19) gebildet ist, das in einem dem Ausstellen des Deckels (1) entsprechenden Verschiebebereich des Schlittens (9) in einer Längsführung am Fahrzeugdach verschiebbar ist.

6. Schiebehebedach nach einem der Ansprüche 1 bis 5, dadurch gekennzeichnet, daß eine Rückstelleinrichtung vorgesehen ist, die den Deckel (1) beim Ausstellen etwas zurückverlagert, um ein Einklemmen der zwischen dem Deckel (1) und dem vorderen Rand der Dachöffnung angeordneten Bauteile zu vermeiden.

7. Schiebehebedach nach Anspruch 6, dadurch gekennzeichnet, daß die Führungsschiene (11) an ihrem hinteren Bereich um eine Querachse (13) schwenkbar mit den Deckel (1) verbunden ist.

8. Schiebehebedach nach Anspruch 7, dadurch gekennzeichnet, daß die Rückstelleinrichtung durch die Führungsschiene (11) gebildet ist, die an ihrem nach vorne unten gerichteten Ende ein kreisringabschnittförmiges Bogenelement (14) mit nach oben gerichtetem Ende aufweist, das in einer an das Bogenelement (11) angepaßten Führung in einem zwischen dem Gleitstein (3) und dem Schlitten (9) längsverschiebbar angeordneten Führungselement (15) um eine scheinbare, über dem Führungselement (15) liegende Querachse (16) schwenkbar ist.

9. Schiebehebedach nach Anspruch 8, dadurch gekennzeichnet, daß die Führung durch einen zylinderabschnittförmigen Wandabschnitt (17) und eine darüber zwischen Seitenwänden drehbar angeordnete Rolle (18) gebildet ist, die mit dem Wandabschnitt (17) und den Seitenwänden eine dem Querschnitt des Bogenelements (14) entsprechende Durchtrittsöffnung bildet.

10. Schiebehebedach nach Ansprch 7, dadurch gekennzeichnet, daß die Rückstelleinrichtung durch die Führungsschiene (11) gebildet ist, die an ihrem nach vorne unten gerichteten Ende um eine Querachse (30) schwenkbar an einem in Dachführungsschienen längsverstellbaren Gleitelement (31) befestigt ist, wobei ein von der Führungsschiene oder von einem hinter dem Gleitelement (31) längsverschiebbaren Steuerschlitten (32) seitlich abstehender Bolzen (33) in eine an dem anderen Teil, an dem Steuerschlitten oder an der Führungsschiene (11), ausgebildete Steuerausnehmung (34) eingreift.

11. Schiebehebedach nach Anspruch 10, dadurch gekennzeichnet, daß die an der Führungsschiene (11) ausgebildete Steuerausnehmung (34) durch einen Schlitz gebildet ist, der nach unten konvex gekrümmt schräg nach hinten oben verläuft.

12. Schiebehebedach nach Anspruch 8 oder 10, dadurch gekennzeichnet, daß das Führungselement (15) oder der Steuerschlitten (32) bei ausgestelltem und in Schließstellung befindlichem Deckel (1) von einer Arretierungseinrichtung festgehalten ist.

13. Schiebehebedach nach Anspruch 12, dadurch gekennzeichnet, daß die Arretierungseinrichtung einen am Führungselement (15) oder Steuerschlitten (32) schwenkbaren Sperrhebel mit einer Sperrnase aufweist, die bei ausgestelltem und bei in Schließstellung befindlichem Deckel (1) federbelastet in eine Vertiefung am Fahrzeugdach eingreift und die sich beim Absenken des Deckels (1) aus der Schließstellung von dem mit dem Sperrhebel zusammenwirkenden Deckel (1) aus der Vertiefung heraus in eine Entriegelungsstellung verlagert.

14. Schiebehebedach nach Anspruch 8 oder 10, dadurch gekennzeichnet, daß die Führungsschiene (11) in ihrem hinteren Bereich einen in Schließstellung des Deckels (1) waagrechten Führungsabschnitt (20) aufweist.

## Claims

1. A sliding roof for vehicles, comprising a cover (1) which closes a roof opening in the closed position and can either be lowered and moved backwards from the closed position or extended via its rear edge, the cover (1) being pivotable at the front around a transverse axis (2) on two lateral sliding blocks (3) which are movable longitudinally in roof guides, whereas the rear of the cover is vertically adjustable via two lateral rocking levers (8), one end of each lever being connected so as to be pivotable around a transverse axis on a slide (9) which is longitudinally movable on the vehicle roof, whereas the other end of each lever is connected to a sliding member (10) which is movable in a guide rail (11) supporting the cover (1) at the rear, and when the cover (1) has been lowered from the closed position and moved backwards, the rocking levers project somewhat to the front from the slide (9), which is connected to a driving cable, and when the cover is extended the levers are pivoted into an approximately vertical position bounded by an abutment, in which the levers remain when the cover is additionally extended, and a water channel (29) is disposed in the rear region of the roof opening, characterised in that a sliding element (23) is movable in longitudinal roof guides behind the slide (9), one end of a lever (24) being received in the sliding element so as to be pivotable around a transverse axis (25), whereas the other, forwardly upwardly extending end is secured in the rear side region so as to be pivotable around a transverse axis (26) situated on the cover (1) and a control pin (27) or the like projects laterally from the last-mentioned lever (24) or from a water channel (29) in the form of a component connected to the aforementioned lever (24), the pin (27) engaging in a lateral control path (28) on the vehicle roof so that, when the lowered cover (1) is raised into the closed position, the rocking levers (8) pivot into the approximately vertical position bounded by the abutment, and in the closed position and in every position during extension of the cover (1), the rocking levers (8) press against the abutment in the aforementioned approximately vertical position, assisted by the control pin (27) or the like engaging in the control path (28).

2. A sliding roof according to claim 1, characterised in that the sliding block (3) in the roof guide is freely movable and has two arms (4, 4') laterally spaced apart and extending forwards and receiving a pin (5) which extends transversely between the arms (4, 4') and embodies the transverse axis (2).

3. A sliding roof according to claim 2, characterised in that, after the cover (1) has been fitted, a lug (7) extends underneath the pin (5), the lug being formed on a supporting arm (6) which projects forwards somewhat from the cover (1).

4. A sliding roof according to any of claims 1 to 3, characterised in that the rocking lever (8) has an anti-pivoting device which holds the lever (8) in its vertical position when the extended cover (1) pivots inwards and the slide (9) is moved back.

5. A sliding roof according to claim 4, characterised in that the anti-pivoting means is in the form of a supporting element (19) which projects laterally from the rocking lever (8) and is movable in a longitudinal guide on the vehicle roof in a displacement range of the slide (9) corresponding to the extension of the cover (1).

6. A sliding roof according to any of claims 1 to 5, characterised in that a return device is provided and moves the cover (1) backwards somewhat during extension, to avoid squashing any components disposed between the cover (1) and the front edge of the roof opening.

7. A sliding roof according to claim 6, characterised in that the rear region of the guide rail (11) is connected to the cover (1) so as to be pivotable around a transverse axis (13).

8. A sliding roof according to claim 7, characterised in that the return device is formed by the guide rail (11) which, at its forwardly downwardly extending end, has a part-circular curved element (14) having an upwardly extending end and disposed in a guide matching the curved element (11) and in a guide element (15) longitudinally movable between the sliding block (3) and the slide (9), so that the curved element (14) can pivot around a virtual transverse axis (16) situated above the guide element (15).

9. A sliding roof according to claim 8, characterised in that the guide is formed by a cylindrical wall portion (17) and a roller (18) disposed above it so as to be rotatable between side walls, the roller co-operating with the wall portion (17) and the side walls to form an opening corresponding to the cross-section of the curved element (14).

10. A sliding roof according to claim 7, characterised in that the return device is formed by the guide rail (11) which, at its forwardly downwardly directed end, is secured so as to be pivotable around a transverse axis (30) on a sliding element (31) longitudinally movable in roof guide rails, and a pin (33) laterally projecting from the guide rail or from a control slide (32) longitudinally movable behind the sliding element (31) engages in a control recess (34) formed in the other part, on the control slide or on the guide rail (11).

11. A sliding roof according to claim 10, characterised in that the control recess (34) formed on the guide rail (11) is a slot which has a convex curvature downwards and slopes upwards to the rear.

12. A sliding roof according to claim 8 or 10, characterised in that the guide element (15) or the control slide (32) is held by a locking device when the cover (1) is extended and in the closed position.

13. A sliding roof according to claim 12, characterised in that the locking device comprises a locking lever pivotable on the guide element (15) or control slide (32) and comprising a lug which is spring biased and engages in a recess in the vehicle roof when the cover (1) is extended and when the cover (1) is in the closed position, whereas when the cover (1) is lowered from the closed position the lug moves into an unlocking position out of the recess and away from the cover (1) co-operating with the locking lever.

14. A sliding roof according to claim 8 or 10, characterised in that the rear region of the guide rail (11) comprises a guide portion (20) which is horizontal when the roof (1) is in the closed position.

## Revendications

1. Toit ouvrant relevable pour véhicules, avec un couvercle (1) relié à un câble d'entraînement fermant dans sa position de fermeture, une ouverture du toit, et qui, à partir de sa position de fermeture peut, soit être abaissé et être déplacé vers l'arrière, soit être relevé à son bord arrière, tandis que ce couvercle (1) est susceptible à l'avant de pivoter autour d'un axe transversal (2) sur deux coulisseaux (3) latéraux susceptibles de coulisser longitudinalement dans des guidages du toit, tandis qu'il est susceptible d'être déplacé en hauteur à l'arrière, par l'intermédiaire de deux leviers oscillants latéraux (8), qui sont respectivement reliés à leurs extrémités, en étant susceptibles de pivoter autour d'un axe transversal, d'une part, avec un chariot (9) susceptible de se déplacer longitudinalement sur le toit du véhicule et, d'autre part, avec un corps glissant (10) qui est susceptible de se déplacer sur un rail de guidage (11) supportant en arrière le couvercle (1), tandis qu'en outre les leviers oscillants (8), lorsque le couvercle est abaissé à partir de sa position de fermeture et déplacé vers l'arrière par le chariot (9) relié à un câble d'entraînement, font saillie vers l'avant et lorsque le couvercle est relevé, ils pivotent dans une position à peu près verticale limitée par une butée, position dans laquelle ils restent lorsque le couvercle continue à être relevé, tandis que sur la partie arrière de l'ouverture du toit, est disposée une rigole (29), toit ouvrant relevable caractérisé en ce que derrière le chariot (1) un élément glissant (23) est susceptible de se déplacer dans des guidages longitudinaux du toit, élément sur lequel est reçue, de façon à pouvoir pivoter autour d'un axe transversal (25), une extrémité d'un levier (24), lequel par son autre extrémité dirigée vers l'avant et le haut, est fixé de façon à pouvoir pivoter autour d'un axe transversal (26) prévu sur le couvercle (1) dans la zone latérale arrière, tandis qu'à partir de ce levier (24) précité ou à partir de la rigole (29) réalisée sous la forme d'une partie constitutive reliée au levier (24) précité, fait saillie latéralement un goujon de commande (27) ou un organe analogue, qui vient en prise dans une glissière latérale (28) sur le toit du véhicule, de sorte que les leviers oscillants (8), lors du soulèvement dans la position de fermeture du couvercle abaissé (1), pivotent dans la position à peu près verticale limitée par la butée, cependant que ces leviers oscillants (8) soutenus dans la position de fermeture et dans toutes positions lors du relèvement du couvercle (1) par le goujon de commande (27) venant en prise dans la glissière de commande (28), s'appliquent dans cette position à peu près verticale, contre la butée.

2. Toit ouvrant relevable, selon la revendication 1, caractérisé en ce que le coulisseau (3) est susceptible de se déplacer librement dans le guidage du toit, et comporte deux branches (4, 4') orientées vers l'avant et distantes latéralement, qui reçoivent entre elles, un goujon (5) s'étendant transversalement et constituant l'axe transversal (2).

3. Toit ouvrant relevable selon la revendication 2, caractérisé en ce que le goujon (5), après le montage du couvercle (1) est saisi à l'arrière par un nez (7) qui est formé sur un bras de support (6) faisant saillie à peu près vers l'avant à partir du couvercle (1).

4. Toit ouvrant relevable selon une des revendications 1 à 3, caractérisé en ce que le levier oscillant (8) comporte une sécurité de pivotement, qui lors du rabattement du couvercle relevé (1) et le déplacement en arrière du chariot (9) fixe le levier oscillant (8) dans sa position verticale.

5. Toit ouvrant relevable selon la revendication 4, caractérisé en ce que la sécurité de pivotement est formée par un élément d'appui (19) faisant saillie latéralement à partir du levier oscillant (8), et qui est susceptible de coulisser dans un guidage longitudinal sur le toit du véhicule, dans une zone de coulissement correspondant au relèvement du couvercle (1).

6. Toit ouvrant relevable selon une des revendications 1 à 5, caractérisé en ce qu'il est prévu un dispositif de rappel, qui dépasse quelque peu vers l'arrière le couvercle (1) lors de son relevage pour éviter un coincement des parties constitutives disposées entre le couvercle (1) et le bord antérieur de l'ouverture du toit.

7. Toit ouvrant relevable selon la revendication 6, caractérisé en ce que le rail de guidage (11) est relié à sa partie arrière au couvercle (1) en étant susceptible de pivoter autour d'un axe transversal (13).

8. Toit ouvrant relevable selon la revendication 7, caractérisé en ce que le dispositif de rappel est constitué par le rail de guidage (11) qui, à son extrémité orientée vers l'avant et vers le bas, comporte un élément (14) en forme de tronçon d'anneau circulaire avec une extrémité orientée vers le haut, qui passant dans un guidage adapté à cet élément (14) sur un élément de guidage (15) disposé de façon à pouvoir se déplacer longitudinalement entre le coulisseau (3) et le chariot (9), est susceptible de pivoter autour d'un axe transversal (16) apparent se situant au-dessus de l'élément de guidage (15).

9. Toit ouvrant relevable selon la revendication 8, caractérisé en ce que le guidage est constitué par un tronçon de paroi (17) en forme de tronçon de cylindre et un galet (18) disposé au-dessus de façon à pouvoir tourner entre des parois latérales, ce galet formant avec le tronçon de paroi (17) et les parois latérales, une ouverture de passage correspondant à la section transversale de l'élément (14).

10. Toit ouvrant relevable selon la revendication 7, caractérisé en ce que le dispositif de rappel est constitué par le rail de guidage (11) qui, à son extrémité orientée vers l'avant et vers le bas, est fixé, de façon à pouvoir pivoter autour d'un axe transversal (30), à un élément glissant (31) susceptible de se déplacer longitudinalement dans des rails de guidage du toit, tandis qu'un goujon (33) faisant saillie latéralement à partir du rail de guidage, ou bien d'un chariot de commande (32) susceptible de se déplacer longitudinalement derrière l'élément glissant (31), vient en prise dans un évidement de commande (34) ménagé sur l'autre partie, c'est-à-dire sur le chariot de commande ou bien sur le rail de guidage (11).

11. Toit ouvrant relevable selon la revendication 10, caractérisé en ce que l'évidement de commande (34) ménagé sur le rail de guidage (11) est constitué par une fente dont la convexité vers le bas s'étend obliquement vers l'arrière et le haut.

12. Toit ouvrant relevable selon la revendication 8 ou la revendication 10, caractérisé en ce que l'élément de guidage (15) ou bien le chariot de commande (32) est fixé par un dispositif d'arrêt lorsque le couvercle (1) est relevé et quand il se trouve dans sa position de fermeture.

13. Toit ouvrant relevable selon la revendication 12, caractérisé en ce que le dispositif d'arrêt comporte un levier d'arrêt susceptible de pivoter sur l'élément de guidage (15) ou bien sur le chariot de commande (32), avec un nez d'arrêt qui, lorsque le couvercle (1) est relevé et lorsqu'il se trouve dans sa position de fermeture, vient en prise sous la sollicitation d'un ressort dans une cavité sur le toit du véhicule, et qui lors de l'abaissement du couvercle (1) à partir de la position de fermeture, se déplace hors de la cavité dans une position de déverrouillage.

14. Toit ouvrant relevable selon la revendication 8 ou la revendication 10, caractérisé en ce que le rail de guidage (11) comporte sur sa partie arrière, une partie de guidage (20) horizontale lorsque le couvercle (1) est dans sa position de fermeture.
